# EUROPEAN PATENT APPLICATION

(11) **EP 4 773 491 A1**
(43) Date of publication of application: **08.07.2026**
(21) Application number: 25785842.3
(22) Date of filing: 11.04.2025
(51) Int. Cl.: H02M 1/00

(54) **ELECTRONIC APPARATUS FOR POWER TRANSMISSION**

(30) Priority: 12.04.2024 US 202463633217 P
(71) Applicant: Delta Electronics, Inc., Taoyuan City 33341 (TW)
(72) Inventor: CHENG, Hsieh-Hsiung, Taoyuan City 33341 (TW); PENG, Te-Chih, Taoyuan City 33341 (TW); LO, Ming-Hsiang, Taoyuan City 33341 (TW); CHIANG, Min-Cheng, Taoyuan City 33341 (TW); CHUNG, Ming Feng, Taoyuan City 33341 (TW)
(74) Representative: 2K Patent Partnerschaft mbB
(86) International application number: PCT/CN2025/088492
(87) International publication number: WO 2025/214471

(57) **Abstract**

An electronic device includes an active neutral point clamped power converter and a power terminal device, both of which output and receive a positive power and a negative power through a power guiding element respectively. The power guiding element includes a positive power line, a negative power line, and a neutral line. The power terminal device includes a power unit assembly. The power unit assembly includes a plurality of power units. Each power unit has a first polarity input end and a second polarity input end. The power units include a first power unit group and a second power unit group. the first polarity input ends of the first power unit group are electrically connected to the positive power line of the power guiding element, and the second polarity input ends of the first power unit group are electrically connected to the neutral line. The first polarity input ends of the second power unit group are electrically connected to the neutral line of the power unit assembly, and the second polarity input ends of the second power unit group are electrically connected to the negative power line of the power guiding element.

## Description

### Field of the Invention

The present invention relates to an electronic device, and, in particular, it relates to an electronic device for power transmission having a discrete high-voltage DC input architecture.

### Description of the Related Art

In existing data center power transmission systems, local substations reduce the 15kV AC voltage to 480V AC voltage via power conversion before supplying it to a distributed power supply unit (PSU) or a centralized PSU of servers or network switches. The distributed PSU or the centralized PSU then convert this to low-voltage DC power such as 48V or 12V for use by servers, network switches, or their downstream devices. However, data center power systems need to consider both overall power supply efficiency and the configuration space and flexibility of hardware devices. Therefore, the configuration of power conversion architecture, and the challenges faced by power supplies and power unit assemblies under new configurations, are important issues for data center power transmission systems.

### Brief Summary of the Invention

The present disclosure provides a power system. The power system provides DC high-voltage power to power supplies or power units assemblies. According to the electronic device of the present disclosure, the electronic device includes an active neutral point clamped power converter and a power terminal device. The active neutral point clamped power converter outputs a positive power and a negative power. The power terminal device receives the positive power and the negative power through a power guiding element. The power guiding element includes a positive power line, a negative power line, and a neutral line. The power terminal device includes a power unit assembly. The power unit assembly includes a plurality of power units. Each power unit has a first polarity input end and a second polarity input end. The power units include a first power unit group and a second power unit group. The first polarity input ends of the first power unit group are electrically connected to the positive power line of the power guiding element, and the second polarity input ends of the first power unit group are electrically connected to the neutral line. The first polarity input ends of the second power unit group are electrically connected to the neutral line of the power unit assembly, and the second polarity input ends of the second power unit group are electrically connected to the negative power line of the power guiding element.

According to the electronic device described above, the power consumption of the power units in the first power unit group and the power consumption of the power units in the second power unit group are such that the current in the neutral line is less than the current in the positive power line or the current in the negative power line.

According to the electronic device described above, the current in the neutral line is zero.

According to the electronic device described above, the current in the neutral line does not exceed 50% of the current in the positive or negative power line.

According to the electronic device described above, the first power unit group and the second power unit group among the power units are disposed in the power unit assembly.

According to the electronic device described above, the power terminal device includes a first power unit assembly and a second power unit assembly. The first power unit group among the power units is disposed within the first power unit assembly, and the second power unit group among the power units is disposed within the second power unit assembly.

According to the electronic device described above, the power terminal device includes a server, and the first power unit group and the second power unit group among the power units are disposed in the server.

According to the electronic device described above, the power terminal device includes a first server and a second server. The first power unit group among the power units is disposed in the first server. The second power unit group of among the power units is disposed in the second server.

According to the electronic device described above, the power terminal device further includes a server. The server is electrically connected to the power unit assembly to receive an operating voltage from the power unit assembly.

According to the electronic device described above, the first power unit group outputs the operating voltage to the server based on the positive power. The second power unit group outputs the operating voltage to the server based on the negative power.

According to the electronic device described above, one end of the power guiding element is electrically connected to a first connector. The power guiding element is electrically connected to the power terminal device through the first connector.

According to the electronic device described above, the first connector has a foolproof structure.

According to the electronic device described above, the power terminal device includes a second connector. The second connector is electrically connected to the power units to be connected to the first connector.

According to the electronic device described above, the power terminal device further includes a software foolproof mechanism, which enables the first connector to be electrically connected to the second connector in either a normal or reverse connection manner.

According to the electronic device described above, each power unit includes the software foolproof mechanism.

According to the electronic device described above, the power terminal device further includes a voltage foolproof circuit, which enables the first connector to be electrically connected to the second connector in either a normal or reverse connection manner.

According to the electronic device described above, the voltage foolproof circuit includes a first transistor, a second transistor, a third transistor, a fourth transistor, and a capacitor. The first transistor includes a first end, a second end, and a control end. The second end of the first transistor is electrically connected to the neutral line. The second transistor includes a first end, a second end, and a control end. The first end of the second transistor is electrically connected to the neutral line. The third transistor includes a first end, a second end, and a control end. The first end of the third transistor is electrically connected to the first end of the first transistor. The second end of the third transistor is electrically connected to an input power. The fourth transistor includes a first end, a second end, and a control end. The first end of the fourth transistor is electrically connected to the input power. The second end of the fourth transistor is electrically connected to the second end of the second transistor. The capacitor is electrically connected between the first end of the first transistor and the second end of the second transistor.

According to the electronic device described above, each power unit includes the voltage foolproof circuit.

According to the electronic device described above, each power unit detects the voltage of the input power and controls the control end of the first transistor, the control end of the second transistor, the control end of the third transistor, and the control end of the fourth transistor according to the voltage of the input power.

According to the electronic device described above, when the voltage of the input power is equal to that of the positive power, each power unit turns on the second transistor and the third transistor, and turns off the first transistor and the fourth transistor.

According to the electronic device described above, when the voltage of the input power is equal to that of the negative power, each power unit turns on the first transistor and the fourth transistor, and turns off the second transistor and the third transistor.

According to the electronic device described above, when the number of the first power unit group is not equal to the number of the second power unit group, the neutral line of the power unit assembly withstands the current consumed by at least one of the power units.

According to the electronic device described above, the positive power outputs a first current through the positive power line. The first current flows through the first power unit group and finally returns to the positive power through the neutral line.

According to the electronic device described above, the negative power outputs a second current through the neutral line. The second current flows through the second power unit group and finally returns to the negative power through the negative power line.

According to the electronic device described above, the first current and the second current cancel each other out in the neutral line.

### Brief Description of the Drawings

FIG. 1 is a schematic diagram of a power unit assembly 104 in accordance with some embodiments of the present disclosure.
FIG. 2A is a schematic diagram of an electronic device 100 in accordance with some embodiments of the present invention.
FIG. 2B is a schematic diagram of a power terminal device 114 in the electronic device 100 in FIG. 2A in accordance with some embodiments of the present invention.
FIG. 2C is a schematic diagram of the power terminal device 114 in the electronic device 100 in FIG. 2A in accordance with some embodiments of the present invention.
FIG. 3 is a schematic diagram of the power unit assembly 104 in the power terminal device 114 in FIG. 1 in accordance with some embodiments of the present invention.
FIG. 4 is a perspective view of the power unit assembly 104 in the power terminal device 114 in FIG. 1 in accordance with some embodiments of the present invention.
FIGS. 5A and 5B are schematic diagrams of a voltage foolproof circuit 400 in the power unit assembly 104 in FIG. 1 in accordance with some embodiments of the present invention.

### Description of Reference Numerals in the Attached Figures:

100: Electronic Device
102: Active Neutral Point Clamped Power Converter
103: Power Guiding Element
104: Power Unit Assembly
106: Server
108: High-voltage Power Station
110: Solid State Transformer
112: Renewable Energy Power Converter
114: Power Terminal Device
15KV_{AC}: Medium Voltage AC Voltage 15 Kilovolts
HVDC: ±400V_{DC}: High Voltage DC Voltage ±400 Volts
12/48V_{DC}: DC Voltage 12 or 48 Volts
50KVA@800V_{DC}: Transmitting 50 Kilowatt-hours of power Using 800 volts DC voltage
+V_{DC}=+1/2HVDC: Voltage +V_{DC} Being Half of Positive High Voltage (HVDC)
-V_{DC}=-1/2HVDC: Voltage-V_{DC} Being Half of Negative High Voltage (HVDC)
200,202,204,206,208,210: current
220: First Power Unit Group
230: Second Power Unit Group
240: Positive Power Line
250: Negative Power Line
260,GND: Neutral Line
PSU1,PSU2,PSU3,PSU4,PSUN,PSUN+1: Power Unit
A: Circle
300: Neutral Line
302: First Connector
304: Second Connector
PE: Local Ground
+V_{DC},-V_{DC}: Voltage
400: Voltage Foolproof Circuit
402,404,406: Connection End
PSU: Power Unit
Q1,Q2,Q3,Q4: Transistor
C: Capacitor
500,502: Current Path

### Detail Description of the Invention

Reference will now be made in detail to exemplary embodiments of the invention, examples of which are illustrated in the accompanying drawings. Wherever possible, the same element references are used in the drawings and description to denote the same or similar parts.

Certain terms are used throughout the description and following claims to refer to particular components. As one skilled in the art will understand, electronic equipment manufacturers may refer to a component by different names. This document does not intend to distinguish between components that differ in name but not function. It is understood that the words "comprise", "have" and "include" are used in an open-ended fashion, and thus should be interpreted to mean "include, but not limited to...".

The directional terms used throughout the description and following claims, such as: "on", "up", "above", "down", "below", "front", "rear", "back", "left", "right", etc., are only directions referring to the drawings. Therefore, the directional terms are used for explaining and not used for limiting the present invention. Regarding the drawings, the drawings show the general characteristics of methods, structures, or materials used in specific embodiments. However, the drawings should not be construed as defining or limiting the scope or properties encompassed by these embodiments. For example, for clarity, the relative size, thickness, and position of each layer, each area, or each structure may be reduced or enlarged.

When the corresponding component such as layer or area is referred to as being "on another component", it may be directly on this other component, or other components may exist between them. On the other hand, when the component is referred to as being "directly on another component (or the variant thereof)", there is no component between them. Furthermore, when the corresponding component is referred to as being "on another component", the corresponding component and the other component have a disposition relationship along a top-view/vertical direction, the corresponding component may be below or above the other component, and the disposition relationship along the top-view/vertical direction is determined by the orientation of the device.

The terms "approximately," "equal to," "equivalent to," "same," "substantially," or "roughly" are generally interpreted as being within 20% of a given value or range, or as being within 10%, 5%, 3%, 2%, 1%, or 0.5% of a given value or range.

The ordinal numbers used in the specification and claims, such as "first" and "second," are used to modify elements and do not in themselves imply or represent any prior ordinal number of the element (or the elements), nor do they represent the order of one element with another element, or the order of manufacturing process. The use of these ordinal numbers is only to enable a named element to be clearly distinguished from another element with the same name. The same terminology may not be used in the patent application scope and the specification. Therefore, the first component in the specification may be the second component in the patent application scope.

The electrical connection or coupling described in this invention can refer to a direct connection or an indirect connection. In the case of a direct connection, the endpoints of the two circuit components are directly connected or connected to each other by a conductor segment. In the case of an indirect connection, the endpoints of the two circuit components are connected by a switch, diode, capacitor, inductor, resistor, other suitable components, or a combination of the above components, but are not limited thereto.

In this invention, the thickness, length, and width can be measured using an optical microscope, while the thickness or width can be measured from a cross-sectional image in an electron microscope, but these are not limitations. Furthermore, any two values or directions used for comparison may have a certain degree of error. Additionally, the terms "equal to," "equivalent to," "identical," "substantially," or "approximately" used in this invention generally mean falling within 10% of a given value or range. In addition, the terms "given range is from the first value to the second value" and "given range falls within the range of the first value to the second value" indicate that the given range includes the first value, the second value, and other values in between. If the first direction is perpendicular to the second direction, the angle between the first direction and the second direction can be between 80 degrees and 100 degrees; if the first direction is parallel to the second direction, the angle between the first direction and the second direction can be between 0 degrees and 10 degrees.

It should be understood that the following embodiments can be implemented by replacing, recombining, or mixing features from several different embodiments to complete other embodiments without departing from the concept of the present invention. Features between embodiments can be arbitrarily mixed and matched as long as they do not violate the inventive concept or conflict with it.

Unless otherwise defined, all terms used herein (including technical and scientific terms) have the same meaning as commonly understood by one of ordinary skill in the art to which this invention pertains. It is understood that these terms, for example, as defined in commonly used dictionaries, should be interpreted as having meanings consistent with the background or context of the relevant technology and the present invention, and should not be interpreted in an idealized or overly formal manner, unless specifically defined in the embodiments of the present invention.

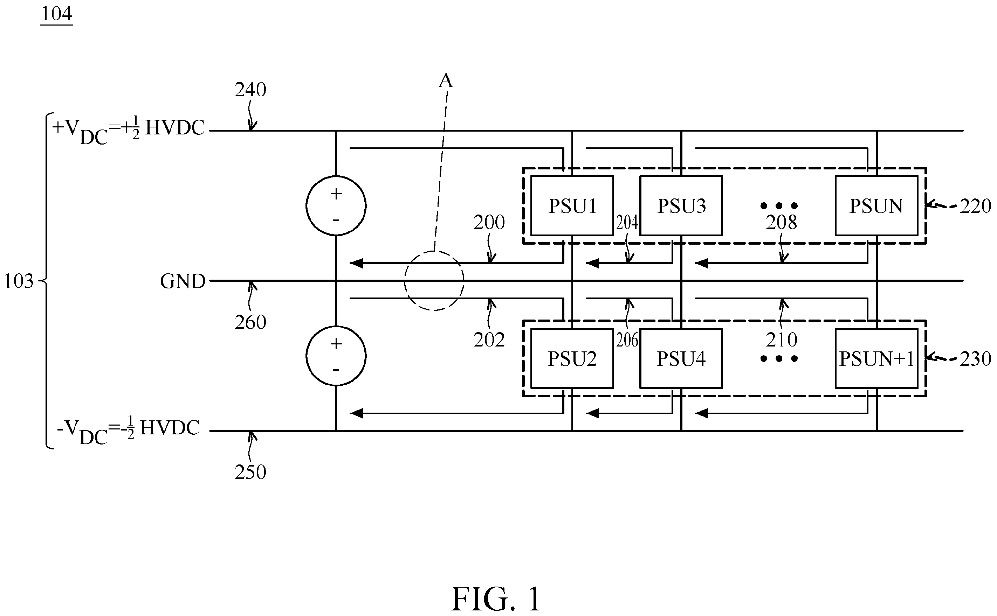

FIG. 1 is a schematic diagram of a power unit assembly 104 in accordance with some embodiments of the present invention. As shown in FIG. 1, the power terminal device 114 includes a plurality of power units. In detail, the power unit assembly 104 in the power terminal device 114 includes a plurality of power units, such as a power unit PSU1, a power unit PSU2, a power unit PSU3, a power unit PSU4, ..., a power unit PSUN, and a power unit PSUN+1. Each power unit has a first polarity input end and a second polarity input end. The power units include a first power unit group 220 and a second power unit group 230. In some embodiments of FIG. 1, the first power unit group 220 includes a power unit PSU1, a power unit PSU3, ..., and a power unit PSUN. The second power unit group 230 includes a power unit PSU2, a power unit PSU4, ..., and a power unit PSUN+1.

The first polarity input end of the first power unit group 220 is electrically connected to a positive power line 240 of the power guiding element. The second polarity input end of the first power unit group 220 is electrically connected to a neutral line (GND) 260 of the power unit assembly 104. For example, the first polarity input end of each of the power unit PSU1, the power unit PSU3, ..., the power unit PSUN is electrically connected to the positive power line 240. The second polarity input end of each of the power unit PSU1, power unit PSU3, ..., power unit PSUN is electrically connected to the neutral line 260 of the power unit assembly 104. The voltage +VDC on the positive power line 240 can be, for example, half of the high voltage (HVDC) output by the active neutral clamped power converter 102, that is, +VDC =+1/2HVDC. The voltage on the neutral line 260 can be, for example, 0V.

The first polarity input end of the second power unit group 230 is electrically connected to the neutral line 260 of the power unit assembly 104. The second polarity input end of the second power unit group 230 is electrically connected to the negative power line 250 of the power guiding element. For example, the first polarity input end of each of the power unit PSU2, the power unit PSU4, ..., and the power unit PSUN+1 is electrically connected to the neutral line 260. The second polarity input end of each of the power unit PSU2, the power unit PSU4, ..., and the power unit PSUN+1 is electrically connected to the negative power line 250 of the power guiding element. The voltage on the neutral line 260 can be, for example, 0V. The voltage -VDC on the negative power line 250 can be, for example, half of the high voltage (HVDC) output by the active neutral clamped power converter 102, that is, -VDC =-1/2HVDC.

In some embodiments, the first power unit group 220 outputs an operating voltage (e.g., 12/48VDC) to the server 106 based on a positive power (e.g., +400VDC). The second power unit group 230 outputs an operating voltage (e.g., 12/48VDC) to the server 106 based on a negative power (e.g., -400VDC). In some embodiments of FIG. 1, the positive power (e.g., +400VDC) outputs a first current through the positive power line 240. The first current flows through the first power unit group 220 and finally flows back to the positive power (e.g., +400VDC) through the neutral line 260. For example, the current 200 flows through the power unit PSU1 through the positive power line 240 and flows back to the positive power through the neutral line 260. The current 204 flows through the power unit PSU3 through the positive power line 240 and flows back to the positive power through the neutral line 260. The current 208 flows through the power unit PSUN through the positive power line 240 and flows back to the positive power through the neutral line 260.

In some embodiments of FIG. 1, the negative power (e.g., -400VDC) outputs a second current through the neutral line 260. The second current flows through the second power unit group 230 and finally flows back to the negative power (e.g., -400VDC) through the negative power line 250. For example, the current 202 flows through the power unit PSU2 through the neutral line 260 and returns to the negative power through the negative power line 250. The current 206 flows through the power unit PSU4 through the neutral line 260 and returns to the negative power through the negative power line 250. The current 210 flows through the power unit PSUN+1 through the neutral line 260 and returns to the negative power through the negative power line 250. In some embodiments of FIG. 1, the first current (including currents 200, 204, and 208) and the second current (including currents 202, 206, and 210) cancel each other out in the neutral line 260 at circle A.

In some embodiments, when the number of the first power unit group 220 is not equal to the number of the second power unit group 230 (i.e., an unbalanced state), the neutral line 260 of the power unit assembly 104 must be able to withstand the current consumed by at least one power unit. For example, if the number of power units in the first power unit group 220 is 5 (i.e., the first power unit group 220 includes 5 power units) and the number of power units in the second power unit group 230 is 4 (i.e., the second power unit group 230 includes 4 power units), then the neutral line 260 of the power unit assembly 104 must be able to withstand the current consumed by one power unit. Similarly, if the number of power units in the first power unit group 220 is 5 and the number of power units in the second power unit group 230 is 3, then the neutral line 260 of the power unit assembly 104 must be able to withstand the current consumed by two power units.

In some embodiments, power consumption of the power units in the first power unit group 220 and power consumption of the power units in the second power unit group 230 are such that the current in the neutral line 260 is less than the current in the positive power line 240 or the current in the negative power line 250. In some embodiments, the current in the neutral line 260 is zero. In some embodiments, the current in the neutral line 260 does not exceed 50% of the current in the positive power line 240 or the negative power line250.

In some embodiments, the power terminal device 114 includes a first power unit assembly (not shown) and a second power unit assembly (not shown). The first power unit group 220 among the power units is disposed in the first power unit assembly, and the second power unit group 230 among the power units is disposed in the second power unit assembly.

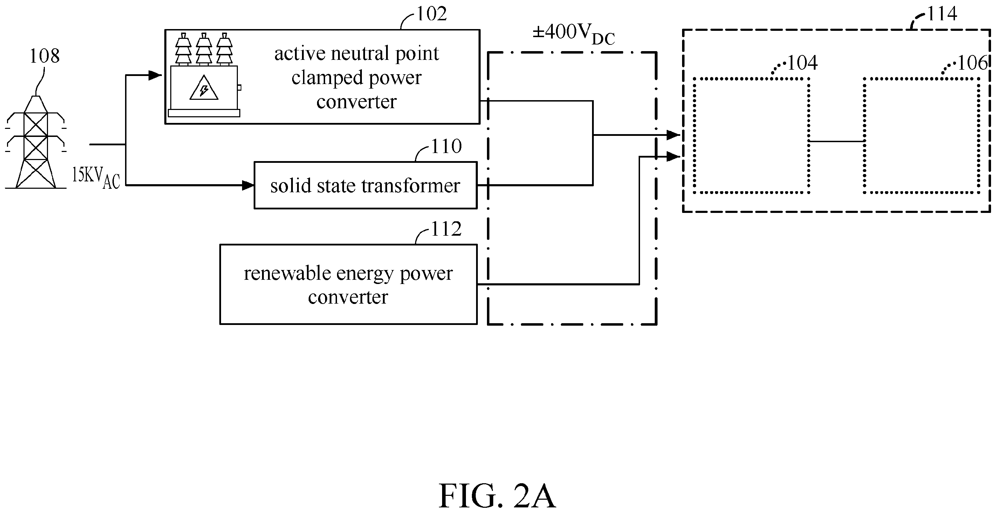

FIG. 2A is a schematic diagram of an electronic device 100 in accordance with some embodiments of the present invention. Refer to FIG. 2A and again to FIG. 1. The electronic device 100 may be, for example, an electronic device for power transmission. As shown in FIG. 2A, the electronic device 100 includes an active neutral point clamped (ANPC) power converter 102, a high-voltage power station 108, and a power terminal device 114. The active neutral point clamped power converter 102 is electrically connected between the high-voltage power station 108 and the power terminal device 114. The active neutral point clamped power converter 102 receives AC power from the high-voltage power station 108 and converts it into DC power with a voltage neutral point for output. In some embodiments, the output of the active neutral point clamped power converter 102 is 800V DC power with a voltage neutral point of ±400VDC, which is transmitted to the power terminal device 114, but the present invention is not limited thereto. Wherein, the high-voltage power station 108 further provides medium-voltage AC power (MVAC, for example, 15 KVAC) to the active neutral point clamped power converter 102, and converts the medium-voltage AC power into high-voltage DC power (HVDC) with a voltage neutral point DC power for output.

In the foregoing embodiments, they further include a solid-state transformer 110. The high-voltage power station 108 outputs AC power to the solid-state transformer 110, and the solid-state transformer 110 further outputs DC power with a voltage neutral point to the power terminal device 114.

In the foregoing embodiments, they further include a renewable energy power converter 112. The renewable energy power converter 112 further outputs DC power with a voltage neutral point to the power terminal device 114.

Please refer again to FIG. 1 and FIG 2A. The power terminal device 114 generates a positive power (e.g., +400VDC), a neutral power, and a negative power (e.g., -400VDC) through a power guiding element 103. The power terminal device 114 includes a power unit assembly 104 and a server 106. The power unit assembly 104 further includes power units PSU1, PSU2, PSU3, PSU4, PSUN, and PSUN+1. The power guiding element 103 includes a positive power line 240, a negative power line 250, and a neutral line 260. The voltage difference between the positive power line 240 and the neutral line 260 is similar to or the same as the voltage difference between the neutral line 260 and the negative power line 250. Typically, the voltage difference is controlled within the input voltage range of each power unit PSU1, PSU2, PSU3, PSU4, PSUN, and PSUN+1. The power units PSU1, PSU2, PSU3, PSU4, PSUN, and PSUN+1 are configured based on the number or power configuration of receiving current loop between the positive power line 240 and neutral line 260 and receiving current loop between the neutral line 260 and the negative power line 250, so that the current in the neutral line 260 is minimized. Wherein, ideally, the current in the neutral line 260 should be zero or extremely low.

In the foregoing embodiments, when the current of the neutral line 260 can be controlled to be zero or extremely low, the current withstand rating of the neutral line 260 can be lower than that of the positive power line 240 and/or the negative power line 250.

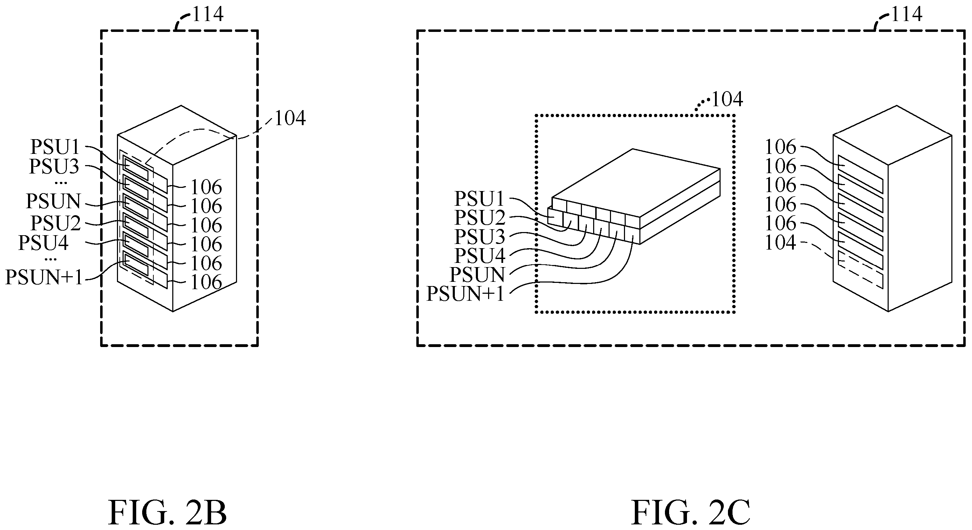

FIG. 2B is a schematic diagram of a power terminal device 114 in the electronic device 100 in FIG. 2A in accordance with some embodiments of the present invention. As shown in FIG. 2B, the power terminal device 114 includes a power unit assembly 104 and a plurality of servers 106. The power unit assembly 104 includes the power unit PSU1, the power unit PSU3, ..., the power unit PSUN, as well as the power unit PSU2, the power unit PSU4, ..., the power unit PSUN+1, and is respectively disposed in their respective servers 106. The power unit PSU1, the power unit PSU3, ..., the power unit PSUN, as well as the power unit PSU2, PSU4, ..., PSUN+1, can each provide power to their respective servers 106. Wherein, please refer to FIG. 1 again. The power units PSU1, PSU3, ..., PSUN, and the power units PSU2, PSU4, ..., PSUN+1 in the power unit assembly 104 are electrically connected to the preceding power through the power guiding element 103.

FIG. 2C is a schematic diagram of the power terminal device 114 in the electronic device 100 in FIG. 2A in accordance with some embodiments of the present invention. The power terminal device 114 includes a power unit assembly 104 and at least one server 106. In some embodiments, the power unit assembly 104 is a power shelf and includes a plurality of power units, or may further include the power units PSU1, PSU3, ..., PSUN, as well as the power units PSU2, PSU4, ..., PSUN+1. Each power unit in the power unit assembly 104 can be used to convert +400V DC voltage to 12V or 48V DC voltage (12/48VDC), and output the 12V or 48V DC voltage to the server 106 as the operating voltage of the server 106. In some embodiments of FIG. 2C, the power unit assembly 104 is used to supply power to one or more servers 106.

In some embodiments of FIG. 2A, the solid-state voltage transformer 110 is electrically connected between the high-voltage power station 108 and the power terminal device 114. The solid-state voltage transformer 110 also receives medium-voltage AC power from the high-voltage power station 108, converts the medium-voltage AC power into the high-voltage DC voltage, and transmits the high-voltage DC voltage to the power unit assembly 104 in the power terminal device 114. The renewable energy power converter 112 converts wind power, solar energy, and other energy into the high-voltage DC voltage and directly transmits the high-voltage DC voltage to the power unit assembly 104 in the power terminal device 114.

In some embodiments, the first power unit group 220 and the second power unit group 230 among the power units are disposed in the server 106.

In some embodiments, the power terminal device 114 includes a first server (not shown) and a second server (not shown). The first power unit group 220 among the power units is disposed in the first server. The second power unit group 230 among the power units is disposed in the second server.

In the foregoing embodiments, the power guiding element can be power transmission and distribution conductive structures such as cables, power buses (such as copper busbars).

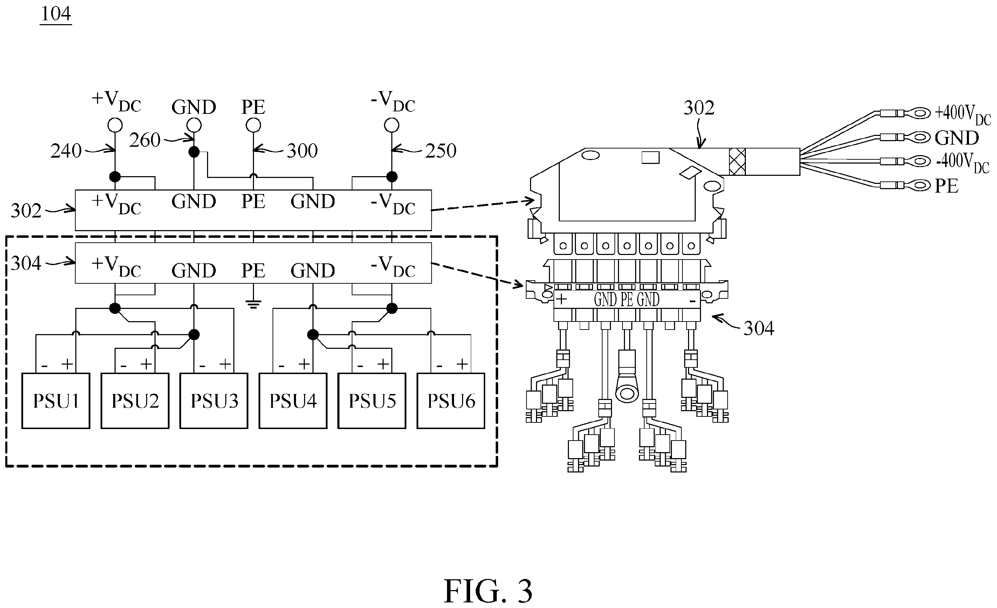

FIG. 3 is a schematic diagram of the power unit assembly 104 in the power terminal device 114 in FIG. 1 in accordance with some embodiments of the present invention. As shown in FIG. 3, the end of the power guiding element 103 from the active neutral point clamped power converter 102 is electrically connected to the first connector 302. The power guiding element 103 is electrically connected to the power unit assembly 104 through the first connector 302. The power guiding element 103 includes a positive power line 240, a negative power line 250, and a neutral line 300. The voltage on the positive power line 240 is +VDC. The voltage on the negative power line is -VDC. The power unit assembly 104 includes a second connector 304. The second connector 304 is electrically connected to a plurality of power units (e.g., including power units PSU1, PSU2, PSU3, PSU4, PSU5, and PSU6) and is used to connect to the first connector 302. When the first connector 302 connects to the second connector 304, the first connector 302 also includes the neutral line 260. In some embodiments, the first connector 302 includes the neutral line 300. The second connector 304 includes a local ground PE. When the first connector 302 is connected to the second connector 304, the neutral line 300 in the first connector 302 can form grounding protection through the local ground PE of the second connector 304. In some embodiments, alternatively, the local ground PE in the second connector 304 can form grounding protection through the neutral line 300 in the first connector 302.

In some embodiment, in order to prevent the first connector 302 and the second connector 304 from being reversed, the first connector 302 has a foolproof structure. The foolproof structure may be, for example, a foolproof structure on a mechanical component, but the present invention is not limited thereto. In some embodiment, the power terminal device 114 further has a software foolproof mechanism, which enables the first connector 302 to be electrically connected to the second connector 304 in either a normal or reverse connection manner. In some embodiment, each power unit (e.g., including power units PSU1 to PSU6) has a software foolproof mechanism that allows the first connector 302 to be electrically connected to the second connector 304 in either the normal or reverse connection manner.

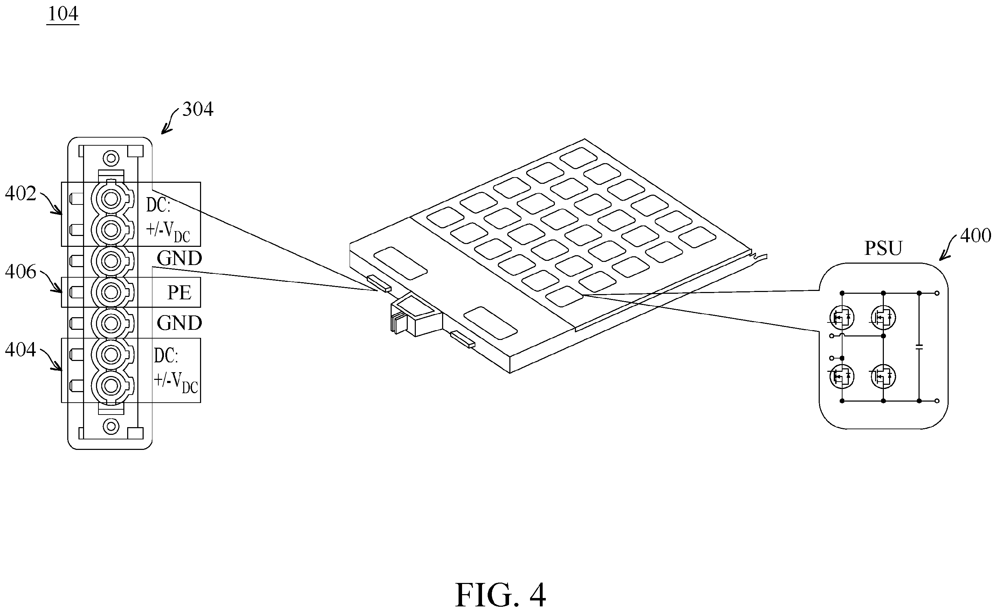

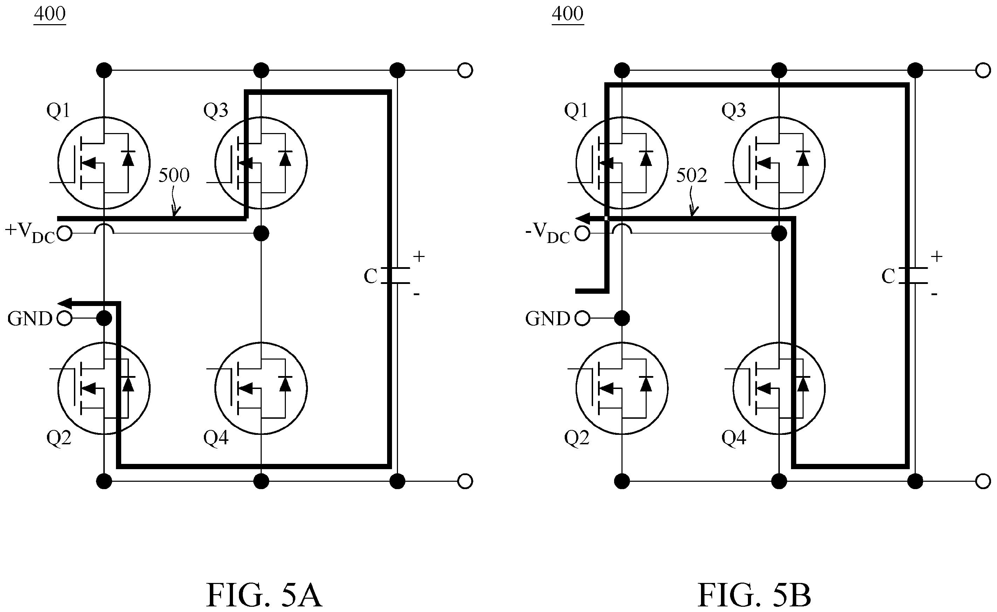

In some embodiment, the power terminal device 114 further includes a voltage foolproof circuit (e.g., the voltage foolproof circuit 400 in FIG. 4 and FIG. 5) that allows the first connector 302 to be electrically connected to the second connector 304 in either the positive or negative connection. In some embodiment, each power unit (PSU, for example including power units PSU1 to PSU6) includes a voltage foolproof circuit that allows the first connector 302 to be electrically connected to the second connector 304 in either the normal or reverse connection manner. In some embodiments, each power unit includes a voltage foolproof circuit.

In some embodiments of FIG. 3, the power unit PSU1, the power unit PSU2, and the power unit PSU3 are electrically connected between the positive power line 240 and the neutral line 260. The power unit PSU4, the power unit PSU5, and the power unit PSU6 are electrically connected between the neutral line 260 and the negative power line 250.

FIG. 4 is a perspective view of the power unit assembly 104 in the power terminal device 114 in FIG. 1 in accordance with some embodiments of the present invention. As shown in FIG. 4, the power unit assembly 104 includes a second connector 304. The second connector 304 includes a connection end 402, a connection end 404, and a connection end 406. When the first connector 302 is connected to the second connector 304 in the normal connection manner, the connection end 402 of the second connector 304 is electrically connected to the positive power line 240 to transmit the voltage +VDC. The connection end 404 of the second connector 304 is electrically connected to the negative power line 250 to transmit the voltage -VDC. The connection end 406 of the second connector 304 is electrically connected to the neutral line 260 and grounded.

When the first connector 302 is connected to the second connector 304 in the reverse connection manner, the connection end 402 of the second connector 304 is electrically connected to the negative power line 250 to transmit the voltage -VDC. The connection end 404 of the second connector 304 is electrically connected to the positive power line 240 to transmit voltage +VDC. The connection end 406 of the second connector 304 is electrically connected to the neutral line 260 and grounded. The power unit assembly 104 includes multiple power units (PSUs), such as the power units PSU1~N+1 in FIG. 2A and the power units PSU1~6 in FIG. 3. Each power unit includes a voltage foolproof circuit 400, which enables the first connector 302 to be electrically connected to the second connector 304 in either the normal or reverse connection manner.

FIGS. 5A and 5B are schematic diagrams of a voltage foolproof circuit 400 in the power unit assembly 104 in FIG. 1 in accordance with some embodiments of the present invention. As shown in FIG. 5A and FIG. 5B, the voltage foolproof circuit 400 includes transistors Q1, Q2, Q3, and Q4, and a capacitor C. Each of the transistors Q1 to Q4 includes a first end, a second end, and a control end. In some embodiments, If the transistors Q1 to Q4 are N-type enhancement-mode metal-oxide-semiconductor field-effect transistors (MOSFETs), then the first end is the drain, the second end is the source, and the control end is the gate. The second end of the transistor Q1 is electrically connected to the neutral line 260. The first end of the transistor Q2 is electrically connected to the neutral line 260. The first end of the transistor Q3 is electrically connected to the first end of the transistor Q1. The second end of the transistor Q3 is electrically connected to an input power. The first end of the transistor Q4 is electrically connected to the input power. The second end of the transistor Q4 is electrically connected to the second end of the transistor Q2. The capacitor C is electrically connected between the first end of the transistor Q1 and the second end of the transistor Q2. The control ends of the transistors Q1 to Q4 are electrically connected to a control region (not shown) of each power unit.

In some embodiments of FIG. 5A and FIG. 5B, each power unit detects the voltage of the input power and controls the control ends of the transistors Q1 to Q4 according to the voltage of the input power. For example, in some embodiments of FIG. 5A, when the voltage of the input power is equal to that of the positive power (e.g., +VDC), each power unit turns on the transistors Q2 and Q3 and turns off the transistors Q1 and Q4 to generate a current path 500. As shown in FIG. 5A, since the transistors Q2 and Q3 are in the on state and the transistors Q1 and Q4 are in the off state, the current flows from the input power through the transistor Q3, the capacitor C, and the transistor Q2, and finally flows to the neutral line 260. For example, the positive power (e.g., voltage +VDC) outputs a first current through the positive power line 240. As the first current flows through the first power unit group 220, each power unit in the first power unit group 220 detects that its input power is positive, causing the first current to flow through the current path 500 and finally flow back to the positive power through the neutral line 260.

In some embodiments of FIG. 5B, when the voltage of the input power is equal to that of the negative power (e.g., voltage -VDC), each power unit turns on the transistors Q1 and Q4 and turns off the transistors Q2 and Q3 to generate a current path 502. As shown in FIG. 5B, since the transistors Q1 and Q4 are in the on state and the transistors Q2 and Q3 are in the off state, the current flows from the neutral line 260 through the transistor Q1, the capacitor C, and the transistor Q4, and finally flows to the input power. For example, the negative power (e.g., voltage -VDC) outputs a second current through neutral line 260. As the second current flows through the second power unit group 230, each power unit in the second power unit group 230 detects that its input power is negative, causing the second current to flow through the current path 502 and finally flow back to the negative power through the negative power line 250. In some embodiments, the voltage foolproof circuit 400 is a combination of a rectifier (e.g., the transistors Q1 to Q4) and a large capacitor.

Since the electronic device 100 of the present invention transmits power in the form of 800V DC voltage, the current flowing from the active neutral point clamped power converter 102 to the power unit assembly 104 is reduced by 35%, thereby reducing transmission loss. Furthermore, each power unit in the power unit assembly 104 includes a voltage foolproof circuit 400, which allows the first connector 302 at the end of the power guiding element to be connected to the second connector 304 in the power unit assembly 104 either in the normal or reverse connection manner, without requiring a mechanical foolproof design for the first connector 302 at the end of the power guiding element, thus saving design costs.

While the present invention is implemented as described above, it should be understood that what is presented above is merely an example and not a limitation. Many modifications to the exemplary embodiments described above can be made without departing from the disclosed concept and scope. Therefore, the breadth and scope of the present invention should not be limited by the embodiments described above. More precisely, the scope of this invention should be defined by the claims and their equivalents. Although the foregoing disclosure has been illustrated and depicted by one or more related embodiments, equivalent changes and modifications will arise in the opinion of others skilled in the art based on the foregoing specifications and drawings. Furthermore, although a particular feature of the invention has been demonstrated in one of the associated plurality of implementations, the aforementioned feature may be combined with one or more other features so that there may be a need for and benefit any known or particular application.

The technical terms used in this specification are for the purpose of describing particular embodiments only and are not intended to be used as a limitation of the invention. Unless the context clearly indicates a difference, as the singular form is used herein, the meaning of "this" and "the foregoing" also includes the plural form. Furthermore, the terms "including," "comprising," "having," "possessing," or variations thereof are used either as a detailed description or as part of the scope of the patent application. The above wording means "to include," and to some extent, it is equivalent to the word "include." Unless otherwise defined, all terms used herein (including technical or scientific terms) are to be generally understood by one of ordinary skill in the art disclosed above. We should be more aware that the terms used above, as defined in commonly used dictionaries, should be interpreted with the same meaning in the context of the relevant technology. Unless explicitly defined herein, the terms used above should not be interpreted as idealized or overly formal.

## Claims

1. An electronic device, comprising:
an active neutral point clamped power converter, configured to output a positive power and a negative power;
a power guiding element;
and
a power terminal device, configured to receive the positive power and the negative power through the power guiding element; wherein the power guiding element comprises a positive power line, a negative power line, and a neutral line, and the power terminal device comprises a power unit assembly; the power unit assembly comprises a plurality of power units;
wherein each power unit has a first polarity input end and a second polarity input end;
wherein the power units comprise a first power unit group and a second power unit group;
wherein the first polarity input ends of the first power unit group are electrically connected to the positive power line of the power guiding element, and the second polarity input ends of the first power unit group are electrically connected to the neutral line; and the first polarity input ends of the second power unit group are electrically connected to the neutral line of the power unit assembly, and the second polarity input ends of the second power unit group are electrically connected to the negative power line of the power guiding element.

2. The electronic device as claimed in claim 1, wherein power consumption of the power units in the first power unit group and power consumption of the power units in the second power unit group enables a current in the neutral line being less than a current in the positive power line or a current in the negative power line.

3. The electronic device as claimed in claim 2, wherein the current in the neutral line is zero.

4. The electronic device as claimed in claim 2, wherein the current in the neutral line does not exceed 50% of the current in the positive or negative power line.

5. The electronic device as claimed in claim 1, wherein the first power unit group and the second power unit group among the power units are disposed in the power unit assembly.

6. The electronic device as claimed in claim 1, wherein the power terminal device comprises a first power unit assembly and a second power unit assembly, the first power unit group among the power units is disposed within the first power unit assembly, and the second power unit group among the power units is disposed within the second power unit assembly.

7. The electronic device as claimed in claim 1, wherein the power terminal device comprises a server, and the first power unit group and the second power unit group among the power units are disposed in the server.

8. The electronic device as claimed in claim 1, wherein the power terminal device comprises a first server and a second server, the first power unit group among the power units is disposed in the first server, and the second power unit group of among the power units is disposed in the second server.

9. The electronic device as claimed in claim 1, wherein the power terminal device further comprises a server, the server is electrically connected to the power unit assembly to receive an operating voltage from the power unit assembly.

10. The electronic device as claimed in claim 9, wherein the first power unit group outputs the operating voltage to the server based on the positive power, and the second power unit group outputs the operating voltage to the server based on the negative power.

11. The electronic device as claimed in claim 1, wherein an end of the power guiding element is electrically connected to a first connector, and the power guiding element is electrically connected to the power terminal device through the first connector.

12. The electronic device as claimed in claim 11, wherein the first connector has a foolproof structure.

13. The electronic device as claimed in claim 11, wherein the power terminal device comprises a second connector, the second connector is electrically connected to the power units to be connected to the first connector.

14. The electronic device as claimed in claim 13, wherein the power terminal device further comprises a software foolproof mechanism, which enables the first connector to be electrically connected to the second connector in either a normal or reverse connection manner.

15. The electronic device as claimed in claim 14, wherein each power unit comprises the software foolproof mechanism.

16. The electronic device as claimed in claim 13, wherein the power terminal device further comprises a voltage foolproof circuit, which enables the first connector to be electrically connected to the second connector in either a normal or reverse connection manner.

17. The electronic device as claimed in claim 16, wherein the voltage foolproof circuit comprises:
a first transistor, comprising a first end, a second end, and a control end; wherein the second end of the first transistor is electrically connected to the neutral line;
a second transistor, comprising a first end, a second end, and a control end; wherein the first end of the second transistor is electrically connected to the neutral line;
a third transistor, comprising a first end, a second end, and a control end; wherein the first end of the third transistor is electrically connected to the first end of the first transistor, and the second end of the third transistor is electrically connected to an input power;
a fourth transistor, comprising a first end, a second end, and a control end; wherein the first end of the fourth transistor is electrically connected to the input power, and the second end of the fourth transistor is electrically connected to the second end of the second transistor; and
a capacitor, electrically connected between the first end of the first transistor and the second end of the second transistor.

18. The electronic device as claimed in claim 17, wherein each power unit comprises the voltage foolproof circuit.

19. The electronic device as claimed in claim 18, wherein each power unit detects a voltage of the input power and controls the control end of the first transistor, the control end of the second transistor, the control end of the third transistor, and the control end of the fourth transistor according to the voltage of the input power.

20. The electronic device as claimed in claim 19, wherein when the voltage of the input power is equal to that of the positive power, each power unit turns on the second transistor and the third transistor, and turns off the first transistor and the fourth transistor.

21. The electronic device as claimed in claim 19, wherein when the voltage of the input power is equal to that of the negative power, each power unit turns on the first transistor and the fourth transistor, and turns off the second transistor and the third transistor.

22. The electronic device as claimed in claim 1, wherein when a number of the first power unit group is not equal to a number of the second power unit group, the neutral line of the power unit assembly withstands a current consumed by at least one of the power units.

23. The electronic device as claimed in claim 1, wherein the positive power outputs a first current through the positive power line, and the first current flows through the first power unit group and finally returns to the positive power through the neutral line.

24. The electronic device as claimed in claim 23, wherein the negative power outputs a second current through the neutral line, and the second current flows through the second power unit group and finally returns to the negative power through the negative power line.

25. The electronic device as claimed in claim 24, wherein the first current and the second current cancel each other out in the neutral line.
